# EUROPÄISCHE PATENTSCHRIFT

(11) **EP 0 562 150 B1**
(45) Veröffentlichungstag und Bekanntmachung des Hinweises auf die Patenterteilung: **31.05.1995**
(21) Anmeldenummer: 92105352.6
(22) Anmeldetag: 27.03.1992
(51) Int. Cl.: B23K 26/08, B41C 1/14

(54) **Vorrichtung zum Bearbeiten dünnwandiger Hohlzylinder mittels eines Laserstrahls**
Apparatus for laser machining a hollow cylinder having a thin wall
Appareil d'usinage de cylindre creus à paroi mince par un laser

(43) Veröffentlichungstag der Anmeldung: 29.09.1993
(73) Patentinhaber: Schablonentechnik Kufstein Aktiengesellschaft, 6330 Kufstein (AT)
(72) Erfinder: Praschberger,Gottfried, A-6330 Schwoich (AT); Miggitsch, Gerhard, A-6322 Langkampfen (AT)
(74) Vertreter: TER MEER STEINMEISTER & PARTNER GbR

(56) Entgegenhaltungen:
- EP-A- 0 320 137
- FR-A- 2 537 247
- GB-A- 425 441
- US-A- 5 079 401
- Section Ch, Week 8747, 2. Dezember 1987 Derwent Publications Ltd., London, GB; Class M23, AN 87-333420/47 & SU-A-1 303 338 (GIPRONEFTESPETSMONT)

## Beschreibung

Die Erfindung betrifft eine Vorrichtung gemäß dem Oberbegriff des Patentanspruchs 1. Eine derartige Vorrichtung ist bereits aus der US-A-5 079 401 bekannt. Diese bekannte Vorrichtung dient zum Bearbeiten der Oberfläche eines dünnwandigen und zur Herstellung einer Siebdruckschablone dienenden Hohlzylinders mit Hilfe eines wenigstens annähernd radial auf den Hohlzylinder auftreffenden und in dessen Längsrichtung bewegbaren Laserstrahls. Dabei wird der Hohlzylinder an seinen axialen Enden mittels zweier auf einem Maschinenbett befestigter Lagereinrichtungen drehbar gelagert, wobei zwischen den Lagereinrichtungen eine den Hohlzyiinder umgebende Stützlagerung vorhanden ist, die so ausgebildet ist, daß sie wenigstens eine Bahn, entlang der der Laserstrahl bewegt wird, frei läßt.

Die Stützlagerung ist hier mit einem Optikschlitten verbunden, der zur Ablenkung des Laserstrahls in Richtung auf den Hohlzylinder zu dient und in Längsrichtung des Hohlzylinders bewegt wird. Hierbei wird die Stützlagerung mitgenommen.

Bei der Herstellung einer Siebdruckschablone bzw. Rundschablone geht man üblicherweise von einem metallischen Hohlzylinder aus, der an seiner äußeren Oberfläche mit einem organischen Lack dünn beschichtet ist und eine sehr geringe Wandstärke aufweist. Der metallische Hohlzylinder besitzt eine Vielzahl von kleinen und sehr eng benachbart zueinander liegenden Durchgangsöffnungen, die durch den organischen Lack dicht verschlossen werden. Zur Erzeugung eines Musterbildes wird der metallische Hohlzylinder in einer Vorrichtung, die einer Drehbank ähnlich ist, mit beiden Enden eingespannt und genau rundlaufend mitgenommen. Ein parallel zur Längsachse des Hohlzylinders herangeführter Laserstrahl wird durch einen achsparallel bewegbaren Ablenkspiegel so umgelenkt, daß er dann senkrecht zur Mantelfläche des Hohlzylinders verläuft. Dieser Laserstrahl wird mit Hilfe einer Linsenanordnung so fokussiert, daß ein Fokuspunkt sehr kleinen Durchmessers genau auf der Zylindermantelfläche zu liegen kommt. Wird der Laserstrahl gepulst, so läßt sich der organische Lack entsprechend einem vorgegebenen Musterbild von der Mantelfläche des Hohlzylinders durch Verdampfen abtragen, wobei einerseits der Laserstrahl in Axialrichtung des Hohlzylinders geführt und der Hohlzylinder selbst gedreht wird. In den abgetragenen Lackbereichen liegen somit die Durchgangsöffnungen im Hohlzylinder frei, so daß sich durch sie in einem späteren Stadium viskose Mittel, z. B. eine Druckpaste. hindurchpressen lassen.

Beim Übertragen eines elektronischen Musterbilds auf die Oberfläche des Hohlzylinders muß dessen dünne Zylinderwand ausreichend genau rundlaufen. weil sonst jeder Lauffehler auch eine Fehllage der Gravur, also des zu erzeugenden Musterbilds, verursacht.

Zur Erzielung eines genauen Rundlaufs wurde bisher der Hohlzylinder auf einen genau rundlaufenden Dorn aufgeschoben. Dies hat jedoch den Nachteil, daß in Achsrichtung der Vorrichtung ein Handhabungsraum in der Größe des Hohlzylinders bzw. in Größe der Schablonenlänge frei bleiben muß. Darüber hinaus ist es bei einem Wechsel des Durchmessers der Rundschablonen erforderlich, den rundlaufenden Dorn gegen einen solchen mit einem anderen Durchmesserauszutauschen, was wegen der Größe und des Gewichts dieser Teile eine erhebliche Erschwernis bei der Umrüstarbeit darstellt.

Es ist andererseits bereits bekannt, auf den zu bearbeitenden bzw. zu gravierenden Hohlzylinder einen Ring aufzuschieben, dessen Innendurchmesser nur um wenige zehntel Millimeter größer ist als der Außendurchmessers des Hohlzylinders. Dieser Ring wird mit dem Linsensystem, welches den Laserstrahl fokussiert, mitgeführt, so daß er sich zunächst am linken Ende des Hohlzylinders befindet und dann langsam mit dem Linsensystem zum anderen bzw. rechten Ende des Hohlzylinders bewegt wird. Von Nachteil ist hierbei, daß der Ring, wenn er sich nahe dem linken oder rechten Ende des Hohlzylinders befindet, einen unruhigen Lauf des Hohlzylinders nur schlecht dämpfen kann. In diesem Zustand verbleiben weite Bereiche des Hohlzylinders ohne Unterstützung, so daß sich dort entstehende Schwingungen immer noch genügend stark in den Gravurbereich hinein fortpflanzen können, was zu einer Verzerrung des Musterbilds führt (EP-A-0320137).

Da andererseits der Laserstrahl am Ring seitlich vorbeiläuft. verbleibt in jedem Fall an einem Ende des Hohlzylinders ein der axialen Breite des Rings entsprechender Bereich, der nicht graviert werden kann, so daß sich nicht immer die gesamte Länge des Hohlzylinders zur Musterbildung ausnutzen läßt.

Darüber hinaus besteht bei einer mechanischen Kopplung von Ring und Linsensystem die Gefahr, daß sich bei hoher Rotation des Hohlzylinders Schwingungen über den Ring auf das Linsensystem übertragen, wodurch ebenfalls Verzerrungen im Musterbild entstehen können.

Der Erfindung liegt die Aufgabe zugrunde, die gattungsgemäße Vorrichtung so weiterzubilden, daß weniger Verzerrungen im Musterbild entstehen. Insbesondere soll die Dämpfung des Hohlzylinders nicht mehr von der Axialposition des Laserstrahls abhängen. Schwingungen sollen sich darüber hinaus vom Dämpfungselement nicht mehr auf das Linsensystem übertragen können, das zur Fokussierung des Laserstrahls dient. Dabei soll gleichzeitig sichergestellt werden, daß sich aufgrund des Dämpfungselements keine Verkleinerung der zu gravierenden Fläche des Hohlzylinders ergibt.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine Vorrichtung nach der Erfindung zeichnet sich dadurch aus, daß die Stützlagerung
- an einer vorbestimmten Axialposition des Hohlzylinders fest positioniert ist und
- sich unmittelbar am Maschinenbett abstützt.

Entsprechend der Erfindung wird also die Stützlagerung fest mit der Vorrichtung verbunden, so daß sie nicht in Axialrichtung des Hohlzylinders verschiebbar ist. Sie wird vorzugsweise an der Stelle des Hohlzylinders montiert, an der die größten Zylinderschwingungen erwartet werden. Im allgemeinen treten die größten Schwingungen des Hohlzylinders in seinem mittleren Bereich auf, wenn er über seine gesamte Axiallänge in gleicher Weise ausgebildet ist. Enthält er unterschiedliche Perforationsmuster, so können größere Schwingungen aber auch in Bereichen auftreten, die außerhalb der Mitte des Hohlzylinders zu liegen kommen. Zwischen den Lagereinrichtungen können auch mehrere dieser Stützlagerungen fest positioniert sein, um einen noch ruhigeren Lauf des Hohlzylinders und damit ein noch verzerrungsfreieres Musterbild zu erzielen.

Sämtliche Stützlagerungen geben im Bereich des Laserstrahls den Hohlzylinder frei, so daß der Hohlzylinder über seine gesamte axiale Länge zur Erzeugung eines Musterbilds zur Verfügung steht. Mit anderen Worten wird kein Bereich des Hohlzylinders durch die Stützlagerungen abgeschattet, obwohl diese zum größten Teil um den Hohlzylinder herumgelegt sind, diesen z. B. ringartig umgreifen können.

Nach der Erfindung können sich andererseits Schwingungen des Hohlzylinders nicht mehr über die Stützlagerungen auf das zur Fokussierung des Laserstrahls dienende Linsensystem übertragen, da das Linsensystem und die Stützlagerungen mechanisch voneinander entkoppelt sind. Hierdurch läßt sich ein noch verzerrungsfreieres Musterbild herstellen.

Die Stützlagerungen können in einfacher Weise an Halteeinrichtungen montiert werden, die sich an einem Maschinenbett befinden, das auch zur Aufnahme der Lagereinrichtungen für die Lagerung des Hohlzylinders an seinen axialen Enden dient. Die Halteeinrichtungen befinden sich an vorbestimmten Stellen auf dem Maschinenbett, so daß sie in Übereinstimmung mit der Art oder Länge eines zu bearbeitenden Hohlzylinders ausgewählt werden können. Hierdurch ist eine einfache Umrüstung der Vorrichtung bei einem Typenwechsel der Hohlzylinder möglich.

Nach einer vorteilhaften Ausgestaltung der Erfindung lassen die Stützlagerungen die Oberfläche des Hohlzylinders soweit frei, daß zusammen mit dem Laserstrahl eine den Hohlzylinder außen berührende Stützeinrichtungen über die gesamte axiale Lange des Hohlzylinders geführt werden kann. Die Abstützeinrichtung dient dazu, Schwingungen der Zylinderwand in unmittelbarer Nachbarschaft des Laserstrahls zusätzlich zu dämpfen, und damit also auch in denjenigen Bereichen, die zwischen zwei Stützlagerungen oder zwischen einer Stützlagerung und einer Lagereinrichtung liegen.

Die erfindungsgemäße Vorrichtung weist eine Bedienungsseite auf, von der aus der Hohlzylinder in die Vorrichtung eingesetzt wird. Weisen die Ausnehmungen der Stützlagerungen zur Bedienungsseite, so läßt sich der Hohlzylinder besonders bequem und ohne Umkehr der Bewegungsrichtung in die Stützlagerungen einlegen. Sie lassen sich zu diesem Zweck nach hinten aufklappen, wie noch beschrieben wird. In diesem Fall liegt aber auch der Schlitten für den Umlenkspiegel und die Fokussieroptik an der Bedienungsseite, wodurch sich die Bestückung der Vorrichtung mit dem Hohlzylinder und die Entnahme des Hohlzylinders wiederum erschweren. Er muß über den Umlenkspiegel und die Fokussierungsoptik gehoben werden, was die Gefahr einer Beschädigung dieser Bauelemente mit sich bringt.

Erfindungsgemäß kann daher die Stützlagerung so positioniert sein, daß sie die Oberfläche des Hohlzylinders an einer Seite freiläßt, die von der Bedienungsseite der Vorrichtung weggerichtet ist. Der Hohlzylinder muß jetzt zwar zunächst über die Stützlagerungen hinweggehoben werden, bevor er in die Vorrichtung eingesetzt werden kann, jedoch stehen hierbei nicht mehr die Verschiebeeinrichtung für den Umlenkspiegel und die Fokussierungsoptik sowie diese Bauteile selbst im Wege. Die Verschiebeeinrichtung und die genannten Bauteile befinden sich jetzt vielmehr an der Rückseite der Vorrichtung und sind damit gegenüber unbeabsichtigten Beschädlgungen besser geschützt. Man kann daher näher von der Bedienungsseite her an die Vorrichtung herantreten, so daß Einsatz und Entnahme des Hohlzylinders wesentlich bequemer durchgeführt werden können. Ein Leistungslaser zur Erzeugung des Laserstrahls befindet sich in jedem Fall an der Rückseite der Vorrichtung.

Nach einer sehr vorteilhaften Ausgestaltung der Erfindung weist die Stützlagerung zwei teilkreisartig ausgebildete und zueinander verschwenkbare Lagerbügel auf, die zusammen den Hohlzylinder um mehr als 180 Grad umgeben. Durch die zueinander schwenkbaren Lagerbügel ist es möglich, den Hohlzylinder in einer Richtung in die Stützlagerung einzusetzen, die senkrecht zu dessen Zylinderachse verläuft. Andererseits läßt sich der Hohlzylinder durch die Stützlagerung über einen recht großen Umfangsbereich abstützen, der 270 Grad oder mehr betragen kann, so daß Lagerkräfte möglichst gleichmäßig über den Umfang des Hohlzylinders verteilt auf diesen einwirken und damit eine besonders ruhige Lagerung erzielt wird.

Die Lagerung kann durch Stützrollen erfolgen, die an den Lagerbügeln montiert sind. Um eine möglichst gleichmäßige Kraftverteilung bei der Lagerung zu erzielen, können die Stützrollen unter gleichen Winkelabständen am Umfang des Hohlzylinders zu liegen kommen. Vorzugsweise können drei Stützrollen unter Winkelabständen von jeweils 120 Grad verwendetwerden.

Um einen noch ruhigeren Lauf des Hohlzylinders in der Stützlagerung zu erzielen, können die Stützrollen auch als Permanentmagnete ausgebildet sein, um einen Magnetfluß durch den Hohlzylinder hindurchzuleiten und ihn damit gegen die Stutzrollen zu ziehen. Anstelle der Stützrollen lassen sich aber auch die Lagerbügel mit Permanentmagneten bestücken. Der Magnetfluß wird dann über Polschuhe, die mit den Lagerbügeln verbunden sind, durch den Hohlzylinder hindurchgeleitet, um diesen gegen die Stützrollen zu ziehen, die magnetisch oder unmagnetisch sein können. Auch hierdurch wird ein noch ruhigerer Lauf des Hohlzylinders in der Stützlagerung erzielt.

Nach einer weiteren Ausgestaltung der Erfindung können die Stützrollen im Umfangsbereich elastisches Material aufweisen, beispielsweise mit einem elastischen Bezug versehen sein, um eine Beschädigung des Hohlzylinders zu vermeiden, wenn dieser auf den Stützrollen abrollt. Die Stützrollen können einzeln auch auf separaten Säulen sitzen, die am Maschinenbett befestigt sind. Sie lassen sich aber auch auf Führungsholmen fest positionieren, die parallel zur Längsachse des Hohlzylinders verlaufen.

Nach einer sehr vorteilhaften Weiterbildung der Erfindung gehört zur Stützlagerung ein elastisches Element, das im Innern des Hohlzylinders angeordnet ist und im Bereich der Stützlagerung gegen die Innenwand des Hohlzylinders drückt. Hierdurch läßt sich der gesamte Hohlzylinder im Bereich der Stützlagerung weiter stabilisieren bzw. versteifen, so daß nach innen gerichtete Schwingungsamplituden der Zylinderwand praktisch nicht mehr auftreten können.

Das elastische Element läßt sich mit Hilfe einer stangenförmigen Einrichtung in Axialrichtung ins Innere des Hohlzylinders einführen. Ist die Position der Stützlagerung erreicht, dehnt es sich radial nach außen aus und spannt somit von innen die Zylinderwand.

Das elastische Element kann z. B. ein Spannring sein, der aus Metall besteht. Es kann sich bei dem elastischen Element aber auch um eine aufblasbare Einrichtung handeln, beispielsweise um einen aufblasbaren Ball. Von Bedeutung ist, daß das elastische Element an seiner Oberfläche gegen Laserstrahlung geschützt ist, um nicht durch diese Strahlung beschädigt zu werden. Die Laserstrahlung kann durch die genannten Durchgangsöffnungen im Hohlzylinder hindurchtreten. so daß erfindungsgemäß vorgeschlagen wird, das elastische Element an seiner Oberfläche mit Metallamellen zu versehen. Wird das elastische Element aufgeblasen, so kommen die Metallamellen zwischen der Innenwand des Hohlzylinders und dem elastischen Element zu liegen und schützen damit Letzteres vor zu hoher Wärmeeinwirkung durch den Laserstrahl.

Nach einer anderen sehr vorteilhaften Ausgestaltung der Erfindung sind die Lagerbügel hohlringartig ausgebildet und in ihrer dem Hohlzylinder benachbarten Wand mit Durchgangsöffnungen versehen. In die Lagerbügel läßt sich z. B. Luft mit einstellbarem Druck einblasen, die durch die genannten Durchgangsöffnungen wieder nach außen tritt. Auf diese Weise kann eine Luftkissenlagerung des Hohlzylinders in der Stützlagerung erreicht werden. Die Drucke In den verschiedenen Lagerbügeln können dabei so eingestellt werden, daß ein axialer Lauf des Hohlzylinders in der Stützlagerung möglich ist und dieser nicht am unteren Lagerbügel schleift.

Zur Stabilisierung der Luftkissenlagerung können die die Durchgangsöffnungen aufweisenden Wände der Lagerbügel an ihrer dem Hohlzylinder zugewandten Seite mit einer flachen Ausnehmung versehen sein, die mit den Durchgangsöffnungen in Verbindung steht. Hierdurch läßt sich die Luftkissenlagerung des Hohlzylinders noch weiter verbessern, da aufgrund der durch die flache Ausnehmung gebildeten Druckkammer und dem zwischen dem Rand der flachen Ausnehmung und dem Hohlzylinder gebildeten Spalt ein Mechanismus zur Konstanthaltung des Drucks erhalten wird.

Nach einervorteilhaften weiteren Ausgestaltung der Erfindung besteht die Stützlagerung aus einer halbkreisförmigen Kammer mit zum Hohlzylinder gerichteter offener Seite, wobei auf der halbkreisförmigen Kammer ein perforiertes Endlos-Flachband umläuft. Die halbkreisförmige Kammer umgreift den Hohlzylinder um 180 Grad oder weniger, so daß er sich direkt in die Stützlagerung einsetzen läßt. In der Kammer wird ein Unterdruck erzeugt, um den Hohlzylinder durch Öffnungen im Endlos-Flachband hindurch und damit auch das Endlos-Flachband gegen die konkave Kammerseite zu ziehen. Infolge des Reibschlusses dreht sich bei Drehung des Kohlzylinders das Endlos-Flachband mit. Es kann aber auch motorisch angetrieben werden, beispielsweise über einen Gleichstrommotor. um einen absoluten Gleichlauf mit dem Hohlzylinder zu erzielen.

Da die halbkreisförmige Kammer eine relativ große axiale Breite aufweist, kann sie im Innern Stege zum Abstützen des Endlos-Flachbands aufweisen. Sie verlaufen in Längsrichtung des Flachbands. Entsprechend orientierte parallele Längsstege können sich auch auf der äußeren Oberfläche des Endlos-Flachbands zur linienförmigen Abstützung des Hohlzylinders und zur Bildung getrennter Saugkammern befinden.

Ausführungsbeispiele der Erfindung werden nachfolgend unter Bezugnahme auf die Zeichnung näher beschrieben. Es zeigen:
**Fig.1** eine perspektivische Gesamtansicht der Vorrichtung mit zur Bedienungsseite offener Stützlagerung,
**Fig. 2** eine Draufsicht auf einen von einer Stützlagerung geführten Hohlzylinder,
**Fig. 3** eine Ansicht einer Stützlagerung in Axialrichtung des Hohlzylinders, wobei zur Stützlagerung ein elastisches, ballförmiges Element gehört,
**Fig. 4** eine Ansicht einer anderen Stützlagerung in Axialrichtung des Hohlzylinders, wobei zu dieser Stützlagerung ein Spannelement gehört,
**Fig. 5** einen Axialschnitt durch eine magnetische Stützrolle,
**Fig. 6** einen Schnitt durch eine Stützlagerung mit einem zwischen ihren Seitenwänden angeordneten Permanentmagneten.
**Fig. 7** eine Seitenansicht der Stützlagerung nach Fig. 6,
**Fig. 8** einen Schnitt durch eine Luftkissen-Stützlagerung senkrecht zur Hohlzylinder-Längsrichtung.
**Fig. 9** einen senkrecht zu ihrer Umfangsrichtung liegenden Schnitt der Stützlagerung nach Fig. 8.
**Fig. 10** einen Schnitt senkrecht zur Hohlzylinder-Längsrichtung durch eine weitere Stützlagerung mit Ansaugeffekt und umlaufendem Endlos-Flachband,
**Fig. 11** einen Schnitt senkrecht zur Umfangsrichtung der Stützlagerung nach Fig. 10, und
**Fig. 12** eine Draufsicht auf eine erfindungsgemäße Vorrichtung mit Stützlagerungen, deren Ausnehmungen von der Bedienerseite der Vorrichtung weggerichtet sind.

Die Erfindung wird nachfolgend anhand der Zeichnung im einzelnen beschrieben.

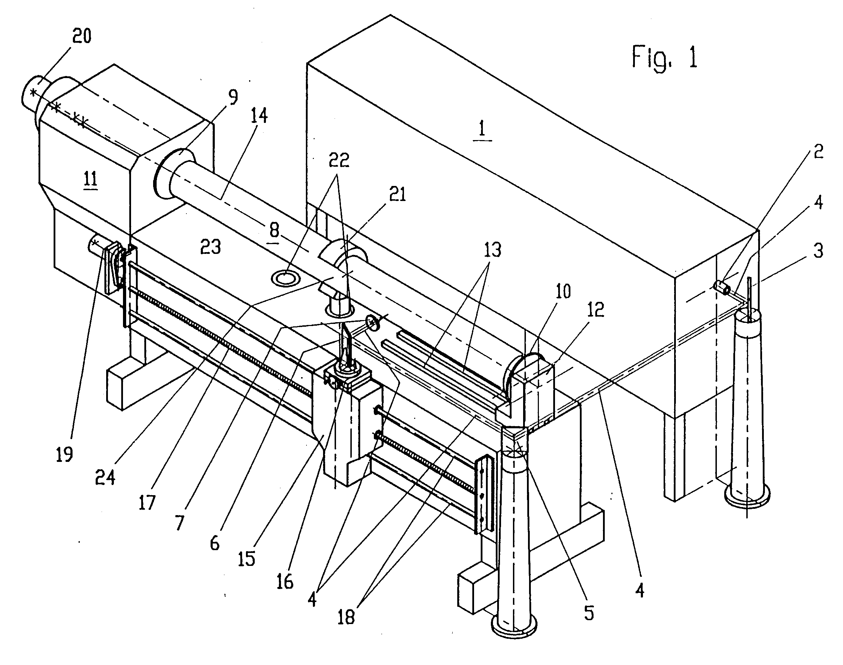

Die Fig. 1 zeigt eine erfindungsgemäße Vorrichtung mit einem Leistungslaser 1, der über eine Austrittsöffnung 2 einen auf einen ersten Ablenkspiegel 3 auftreffenden Laserstrahl 4 ausgibt. Durch den ersten Ablenkspiegel 3 wird der Laserstrahl 4 um 90 Grad umgelenkt und trifft auf einen zweiten Ablenkspiegel 5 auf, um erneut um 90 Grad umgelenkt zu werden, so daß erjetzt in einer zu seiner ursprünglichen Richtung entgegengesetzten Richtung verläuft. Über einen dritten Ablenkspiegel 6 erfolgt nochmals eine Ablenkung des Laserstrahls 4 um 90 Grad, und zwar in Richtung auf den Leistungslaser 1 zu. Dabei wird der nach dem dritten Ablenkspiegel 6 verlaufende Laserstrahl 4 mit Hilfe einer Fokussierungsoptik, im vorliegenden Fall mittels einer Linse 7, so fokussiert, daß sein Brennpunkt auf der äußeren Mantelfläche eines Hohlzylinders 8 zu liegen kommt. die z. B. mit einem organischen Lack dünn beschichtet ist. Der Hohlzylinder 8 besteht aus einem sehr dünnen und gleichmäßig perforierten Metallgitter und ist zwischen zwei drehbar gelagerten Kegelstummeln 9 und 10 gehalten. Der Kegelstummel 9 wird durch einen nicht dargestellten Antrieb in einem Spindelstock 11 in Drehung versetzt. Auch der Kegelstummel 10 ist drehbar gelagert, und zwar in einem Reitstock 12. Der Reitstock 12 kann auf Führungsbahnen 13 in Richtung einer Hohlzylinderachse 14 gegen den Hohlzylinder 8 gepreßt werden, wobei er dann den Hohlzylinder 8 gegen den Kegelstummel 9 drückt. Durch den so herbeigeführten Reibungsschluß werden der Hohlzylinder 8 und der Kegelstummel 10 von der Drehbewegung des Kegelstummels 9 mitgenommen. Wegen des äußerst geringen Reibungswiderstands. welcher der im Reitstock 12 kugelgelagerte Kegelstummel 10 zu überwinden hat, und auch infolge der sehr konstanten Antriebsdrehzahl des Kegelstummels 9, genügen sehr geringe axiale Spannkräfte zwischen dem Hohlzylinder 8 und den Kegelstummeln 9 und 10, um den Hohlzylinder 8 schlupffrei und daher mit der Drehzahl des Kegelstummels 9 anzutreiben.

Der dritte Ablenkspiegel 6 und die Linse 7 sind auf einem in Richtung der Hohlzylinderachse 14 bewegbaren Schlitten 15 montiert. Genauer gesagt trägt der Schlitten 15 einen Querschlitten 16, auf dem der dritte Ablenkspiegel 6 und die Linse 7 angeordnet sind, und durch den eine genaue radiale Justierung des durch die Linse 7 erzeugten Brennpunkts auf der Oberfläche des Hohlzylinders 8 möglich ist. Wird der Schlitten 15 mit Hilfe einer Spindel 17 entlang von Führungsstangen 18 in Richtung der Hohlzylinderachse 14 bewegt, und wird dabei gleichzeitig der Hohlzylinder 8 gedreht, so beschreibt der Brennpunkt der Linse 7 bzw. der im Brennpunkt fokussierte Laserstrahl 4 eine Schraubenlinie auf der Oberfläche des Hohlzylinders 8. Der Antrieb der Spindel 17 erfolgt durch einen Schrittmotor 19. Für die Steuerung der vom Leistunglaser 1 abgegebenen Laserpulse als auch für die Schrittsteuerung des Schrittmotors 19 ist es erforderlich. zu jedem Zeitpunkt die genaue Drehlage des Hohlzylinders 8 zu kennen. Aus diesem Grunde ist mit der Welle des Kegelstummels 9 ein Drehlagendecoder 20 verbunden, der während einer Umdrehung des Hohlzylinders 8 mehrere tausend Impulse abgibt.

Beim Antrieb des sehr dünnwandigen und perforierten Hohlzylinders 8 treten Schwingungserscheinungen auf, die sowohl auf die Biegeeigenfrequenzen bzw. auf die kritischen Drehzahlen des Hohlzylinders 8 als auch auf Membranschwingungen zurückzuführen sind. Diese Schwingungserscheinungen sind umso stärker, je näher die Drehzahl des Hohlzylinders 8 in der Nähe einer Eigenfrequenz liegt. Da der Leistungslaser 1 mit hoher Arbeitsfrequenz betrieben wird, muß die Drehzahl für den Hohlzylinder 8 relativ hoch gewählt werden. Aufgrund der großen Länge des Hohlzylinders 8 liegt dabeijedoch die erste eigenkritische Drehzahl sehr niedrig, so daß es zu einem recht unruhigen Lauf des Hohlzylinders 8 kommt.

Um die Biegeeigenfrequenz auf einen höheren Wert anzuheben, und um die Steifigkeit des Zylindermantels zu verbessern, wird beim vorliegenden Ausführungsbeispiel etwa in der Mitte des Hohlzylinders 8 eine Stützlagerung 21 angeordnet. Diese Stützlagerung 21 ist fest positioniert und wird` während des Betriebs der Vorrichtung nicht in Axialrichtung 14 des Hohlzylinders 8 bewegt. Statt einer Stützlagerung 21 können auch zwei oder mehr Stützlagerungen vorgesehen werden, beispielsweise zwei Stützlagerungen 21, welche dann jeweils den Hohlzylinder 8 etwa in einem Drittel seiner Länge unterstützen.

Die genannten Stützlagerungen 21 sind in Aufnahmebohrungen 22 eingesetzt, die sich in einem Maschinenbett 23 befinden. Dabei kann eine größere Anzahl von Aufnahmebohrungen 22 vorhanden sein, um in Übereinstimmung mit Art und Länge des Hohlzylinders 8 eine gewünschte Anzahl von Stützlagerungen 21 an gewünschten Positionen benutzen zu können. Auf dem Maschinenbett 23 befinden sich der bereits erwähnte Spindelstock 11 und der ,eitstock 12, während an der vorderen Seite des Maschinenbetts 23 der Schlitten 15 geführt ist. Diese vordere Seite des Maschinenbetts 23 stellt die Bedienungsseite der Vorrichtung dar. An der ihr gegenüberliegenden Seite des Maschinenbetts 23 ist der Leistungslaser 1 positioniert, der sich relativ nahe am Maschinenbett 23 befindet. Der Hohlzylinder 8 kann daher praktisch nur von der Bedienungsseite aus in die Vorrichtung eingespannt werden, wobei er über den Schlitten 15 und die darauf befestigte Optik gehoben werden muß. Diejeweiligen Stützlagerungen 21, die den Hohlzylinder 8 jeweils nur teilweise umschließen, sind dabei so positioniert, daß ihre Aussparungen 24 zur Bildung freier Bereiche auf der Oberfläche des Hohlzylinders 8 in Richtung zur Bedienungsseite weisen, also in Richtung des Schlittens 15. Diese Aussparungen 24 sind erforderlich, da der Laserstrahl 4 die Gravurarbeit auch im Bereich der Stützlagerungen 21 ausführen muß, um ein durchgehendes Musterbild zu erzeugen.

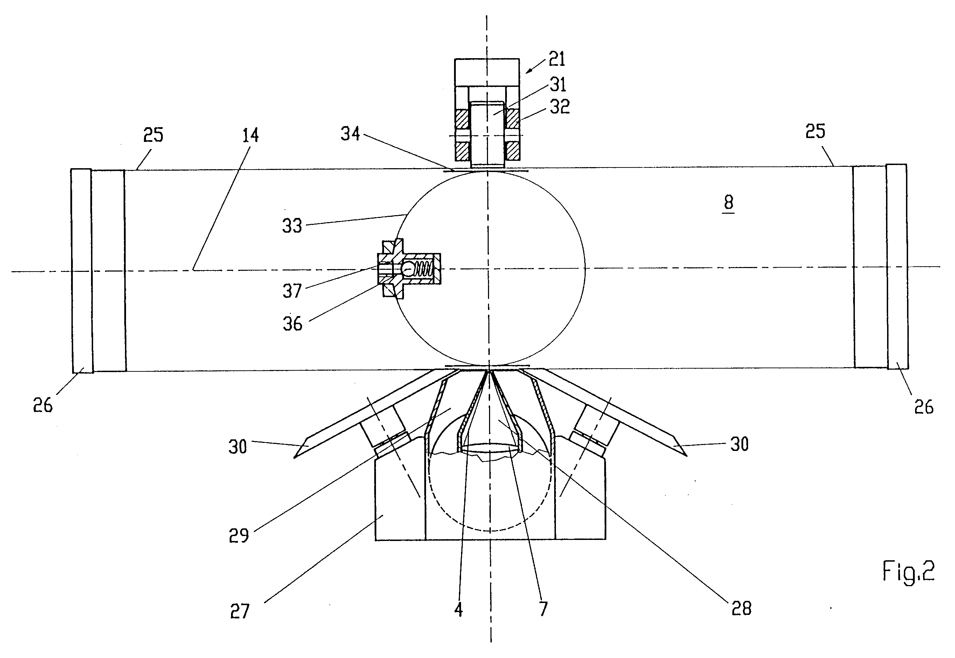

Die Fig. 2 zeigt eine Draufsicht auf den Hohlzylinder 8, wobei gleiche Elemente wie in Fig. 1 mit den gleichen Bezugszeichen versehen sind.

Die Enden 25 des Hohlzylinders 8 werden hier durch zylinderische Innenspannzangen 26 gehalten und zentriert. Die zur Fokussierung des Laserstrahls 4 vorgesehene Linse 7 ist in einem Gravurkopf 27 angeordnet. Innerhalb einer sich zum Hohlzylinder 8 hin verjüngenden Innendüse 28, in der die Linse 7 fest positioniert ist, herrscht ein etwas höherer Druck als der Unlgebungsdruck, wobei der höhere Druck durch Einleitung von Stickstoff aufrechterhalten wird. Die Verjüngung der Innendüse 28 entspricht dem Verlauf des fokussierten Laserstrahls 4 hinter der Linse 7. Der Stickstoff tritt an der engsten Stelle der Innendüse 28 aus dieser aus, also im Bereich der Düsenspitze. und verhindert so das Eindringen von Schmutzteilchen in die Innendüse 28, so daß eine im Laufe der Zeit auftretende Verschmutzung der Linse 7 vermieden wird. Die Innendüse 28 ist von einer größeren Saugdüse 29 konzentrisch umgeben, wobei die Saugdüse 29 einerseits den abdampfenden und sofort wieder kondensierenden Lack absaugt und andererseits die Wandung des Hohlzylinders 8 ansaugt, wodurch die Wandung gezwungen wird, sich dauernd an einen Umfangsrand kegelförmiger Stützscheiben 30 anzulegen, die seitlich an der Saugdüse 29 positioniert sind. Die aus der Innendüse 28, der Saugdüse 29 und den Stützscheiben 30 bestehende Einheit wird in Axialrichtung 14 des Hohlzylinders 8 bewegt, wobei permanent eine Abstützung der Umfangswand des Hohlzylinders 8 durch die Stützscheiben 30 erfolgt, und zwar auch in Bereichen, die von der Stützlagerung 21 entfernt liegen. Die Stützscheiben 30 sind drehbar am Gravurkopf 27 gelagert, wobei ihre Drehachsen relativ zur optischen Achse der Linse 7 nach außen geneigt sind.

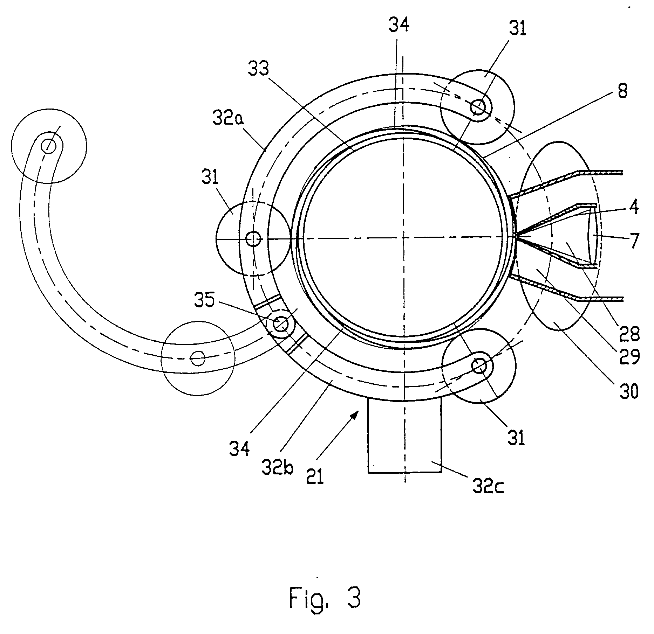

Wie die Fig. 3 erkennen läßt, weist die Stützlagerung 21 eine solche seitliche Ausnehmung auf, daß die Stützscheiben 30 an der Außenwand des Hohlzylinders 8 in Axialrichtung 14 entlanglaufen können, ohne daß sie dabei die Stützlagerung 21 berühren.

Gemäß Fig. 3 enthält die Stützlagerung 21 mehrere Stützrollen 31, beispielsweise drei Stück, die unter gleichmäßigen Winkelabständen voneinander über den Umfang des Hohlzylinders 8 verteilt angeordnet sind. Diese Stützrollen 31 sorgen für die Führung und Lagerung des Hohlzylinders 8. Die Stützrollen 31 sind in zwei teilkreisartig ausgebildeten und zueinanderverschwenkbaren Lagerbügeln 32a und 32b drehbar angeordnet. Im Innern des Hohlzylinders 8 befindet sich ein aufblasbarer Gummiball 33, an dessen Umfang sehr dünne und somit flexible Metallamellen 34 einander überlappend angeordnet sind. Diese Metallamellen 34 verhindern eine Verletzung der empfindlichen Haut des Gummiballs 33 durch den fokussierten Laserstrahl 4, wenn dieser durch Durchgangsöffnungen hindurchtreten sollte, die sich in der Umfangswand des Hohlzylinders 8 befinden. Der Laserstrahl 4 wird durch die Metallamellen 34 reflektiert, wobei nur ein sehr geringer Teil seiner thermischen Energie durch die Metallamellen 34 absorbiert wird. Der Lagerbügel 32a ist mit seinem unteren Ende um das obere Ende des Lagerbügels 32b schwenkbar, wozu in diesem Bereich ein Gelenk 35 angeordnet ist. Der obere Lagerbügel 32a kann somit nach links in Fig. 3 weggeschwenkt werden, und zwar in seine gestrichelt dargestellte Lage, um das Einlegen des Hohlzylinders 8 in die Stützlagerung 21 bzw. die Vorrichtung zu erleichtern. Der untere Lagerbügel 32b ist an einem Fuß 32c befestigt, der in eine der Aufnahmebohrungen 22 in Fig. 1 eingesetzt werden kann.

Wie die Fig. 2 erkennen läßt, ist der Gummiball 33 mit einem Ventil 36 ausgestattet, über das der Gummiball 33 aufgeblasen wird, nachdem er in axialer Richtung in den Hohlzylinder 8 eingeführt worden ist und sich an der richtigen Stelle befindet, also im Bereich der Stützlagerung 21. Ein Schraubanschluß 37 am Ventilkörper erlaubt das Einschrauben eines Rohres zum leichten Befüllen oder Entlüften des Gummiballs 33.

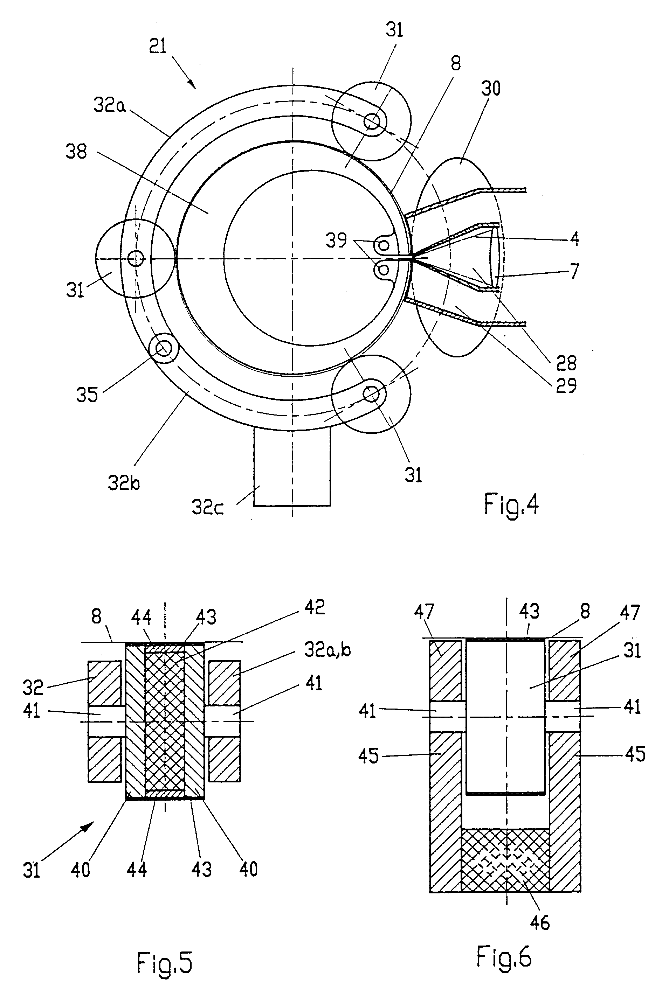

Die Fig. 4 zeigt eine Querschnittsansicht durch eine andere Ausführungsform einer Stützlagerung nach der Erfindung. Gleiche Teile wie in Fig. 3 sind mit den gleichen Bezugszeichen versehen und werden nicht nochmals beschrieben. Anstelle eines aufblasbaren elastischen Balls wird hier ein kreisförmiger Innenspannring 38 nach Art eines Kolbenrings verwendet. Zwei Ösen 39 dienen zur leichten Lockerung der elastischen Vorspannung mit Hilfe eines in den Hohlzylinder 8 einzuführenden, zangenartigen Werkzeugs. Der Innenspannring 38 ist dabei so ausgebildet, daß durch ihn beim Drehen des Hohlzylinders 8 möglichst keine Unwucht hervorgerufen wird.

In der Fig. 5 ist eine als Magnet ausgebildete Stützrolle 31 dargestellt. Mit Hilfe einer derartigen Stützrolle 31 läßt sich die Wand des Hohlzylinders 8 durch magnetische Kräfte zur Anlage an die Stützrolle 31 zwingen. Zwischen zwei Weicheisenscheiben 40 befindet sich ein Permanentmagnet 42, der mit den Weicheisenscheiben 40 verklebt sein kann. Zur drehbaren Lagerung tragen die Weicheisenscheiben 40 jeweils einen nach außen ragenden Zapfen 41. Der durch den Permanentmagneten 42 induzierte magnetische Fluß wird infolge der Weicheisenscheiben 40 verstärkt über die Umfangswand des Hohlzylinders 8 geleitet, so daß diese an die Stützrolle 31 angezogen wird. Zur Vermeidung einer Beschädigung des Lacks auf der Umfangsoberfläche des Hohlzylinders 8 ist der Mantel der Stützrolle 31 mit einem Schutzgummi 43 überzogen. Der Bereich zwischen den beiden Weicheisenscheiben 40 und dem im Durchmesser etwas kleineren Permanentmagneten 42 ist mit einer Hülse 44 aus diamagnetischem Material ausgefüllt.

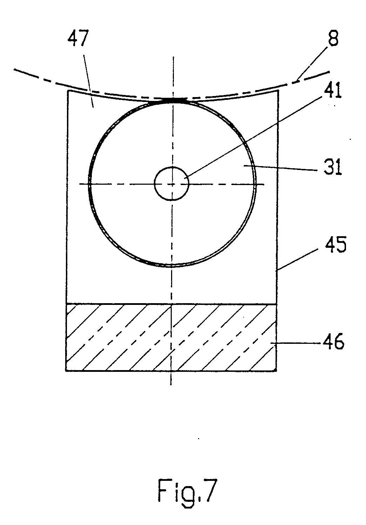

Die Fig. 6 zeigt ebenfalls eine Stützrolle 31, an welche die Wandung des Hohlzylinders 8 mittels magnetischer Kräfte zur Anlage gebracht wird. Die Stützrolle selbst ist dabei unmagnetisch und weist wiederum zwei axiale Zapfen 41 auf, die in Weicheisenwangen 45 gelagert sind. Zwischen den Weicheisenwangen 45 liegt parallel zur Stützrolle 31 ein Permanentmagnet 46. Der magnetische Fluß wird also nicht über die Stützrolle 31 geleitet sondern vom Permanentmagneten 46 über die Weicheisenwangen 45, die mit den Lagerbügeln 32a, b verbunden sind. Der unmittelbar dem Hohlzylinder 8 gegenüberliegende Randbereich 47 der Weicheisenwangen 45 kann jetzt mit besserer Formtreue dem Außenumfang des Hohlzylinders 8 angepaßt werden, wie die Fig. 7 zeigt, wodurch die magnetischen Kräfte, mit deren Hilfe der Hohlzylinder 8 zur Anlage an die Stützrolle 32 gebracht wird, höhere Werte annehmen. Auch hier ist die Stützrolle 31 an ihrer Mantelfläche wieder mit einem Schutzgummi 43 bedeckt.

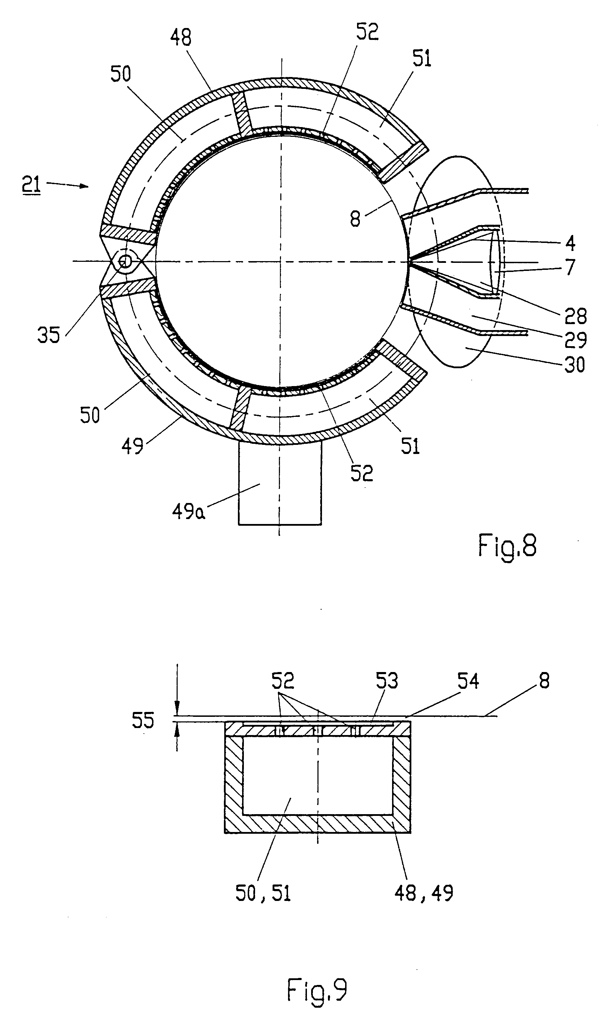

Die Fig. 8 und 9 zeigen eine weitere Ausgestaltung einer Stützlagerung 21. Mit Hilfe dieser Stützlagerung 21 lassen sich die Form und die Lage des Hohlzylinders 8 durch Luftkissen stabilisieren. Die Stützlagerung 21 besteht hier aus zwei Hohlringsegmenten 48, 49, genauer gesagt aus einem oberen Hohlringsegment 48 und aus einem unteren Hohlringsegment 49, das mit einem Fuß 49a fest verbunden ist, welcher in eine der Aufnahmebohrungen 22 eingesetzt werden kann. Beide Hohlringsegmente 48, 49 sind über ein Gelenk 35 schwenkbar miteinander verbunden, so daß das obere Hohlringsegment 48 nach links in Fig. 8 weggeklappt werden kann. In diesem Zustand läßt sich dann der Hohlzylinder 8 in die Stützlagerung 21 einlegen. In jedem der beiden Hohlringsegmente 48 und 49 sind zwei Druckkammern 50 und 51 untergebracht, und zwar eine Niederdruckkammer 50 im Hohlringsegment 48 sowie eine Hochdruckkammer 51 im Hohlringsegment 49. Die Drücke in diesen Kammern 50, 51 werden so eingestellt, daß bezüglich des Hohlzylinders 8 die Resultierende aus allen Druckkräften statisch möglichst gleich Null ist. Die Druckkräfte lassen sich z. B. über komprimierte Luft erzeugen. Mit anderen Worten müssen die hohen Druckkräfte in der Hochdruckkammer 51 sowohl den geringeren Druckkräften in der Niederdruckkammer 50 als auch den Saugkräften das Gleichgewicht halten, die durch den Unterdruckbereich der Saugdüse 29 erzeugt werden. Die für den Betrieb erforderliche Druckluft wird über nicht dargestellte Schlauchleitungen den Druckkammern 50, 51 zugeführt.

Die Lagestabilisierung des Hohlzylinders 8 ergibt sich dann aus den strömungsdynamischen Vorgängen der durch Bohrungen 52 austretenden Luft und dem Strömungsverhalten der Luft in den dahinter vorgesehenen Flachtaschen 53, die seitlich von Spalten 54 zwischen Hohlzylinder 8 und Stützlagerung 21 umgeben sind. Nähert sich der Hohlzylinder 8 einem der Hohlringsegmente 48, 49, so verringert sich in diesem Bereich die Dicke 55 des Spalts 54, so daß die Menge der Luft, die aus diesem Bereich abströmen kann, zurückgeht. Dadurch steigt der Druck in der Flachtasche 53 an, was eine Erhöhung der Kräfte zur Folge hat, welche den Hohlzylinder 8 vom Hohlringsegment 48, 49 wegdrücken. Der umgekehrte Vorgang findet statt, wenn der Hohlzylinder 8 vom Hohlringsegment 48, 49 abrücken will.

Wie die Fig. 9 zeigt, weisen die Hohlringsegmente 48, 49 einen rechteckförmigen Querschnitt auf, wobei in die Außenseite ihrer konkaven Seitenwand. die dem Hohlzylinder 8 zugewandt ist, die Flachtasche 53 über die gesamte Wandlänge eingelassen ist. Vom Boden der Flachtasche 53 gehen die Bohrungen 52 ins Innere der Druckkammern 50, 51 ab.

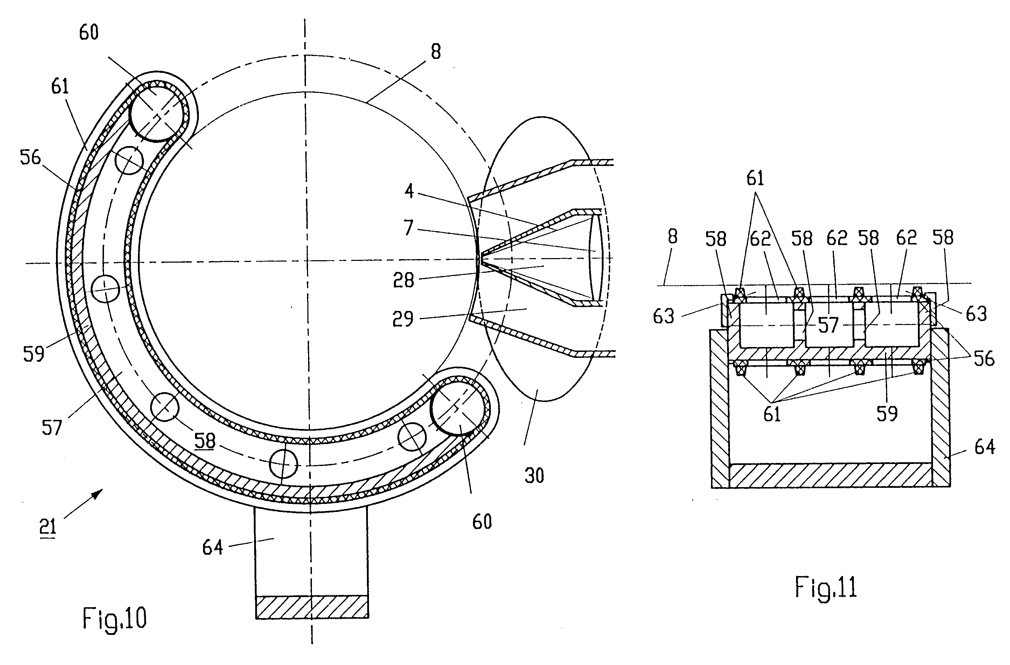

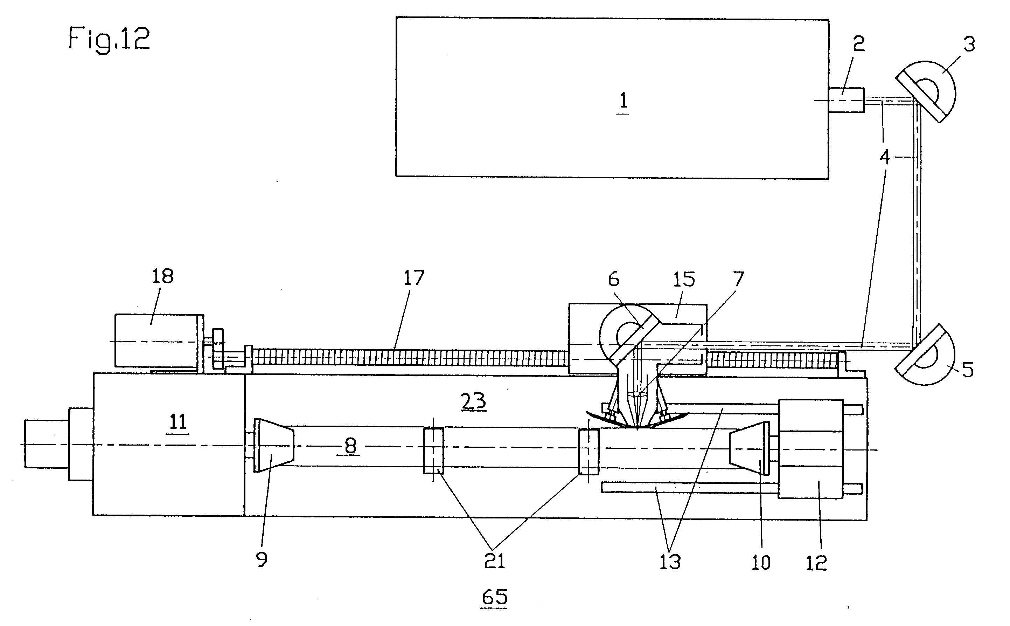

Die Fig. 10 und 11 zeigen eine weitere Ausgestaltung der erfindungsgemäßen Stützlagerung 21. Die Lagefixierung des Hohlzylinders 8 erfolgt hier mit Hilfe eines Endlos-Transportbands 56, das als Flachband ausgebildet ist. Dieses Transportband wird von einer Unterdruckkammer 57 angesaugt, die halbkreisförmig ausgebildet ist und den Hohlzylinder 8 um 180 Grad oder weniger umgreift. Die Unterdruckkammer 57 weist Gleitstege 58 auf, welche auf der dem Hohlzylinder 8 zugekehrten Seite nach einer halbkreisförmigen Kontur abgearbeitet sind. Ein Rücken 59 verschließt diese Unterdruckkammer 57 nach der entgegengesetzten Seite. An zwei Enden der Unterdruckkammer 57 sind zwei Umlenkrollen 60 vorhanden, um welche das Endlos-Transportband 56 herumläuft. Zwischen dem Endlos-Transportband 56 und dem Rücken 59 ist ein etwas größeres Spiel vorgesehen. Durch eine ausreichende und kontinuierliche Absaugung von Luft aus der Unterdruckkammer 57 wird dort ein solcher statischer Druck erzeugt, daß das Endlos-Transportband 56 ständig gegen die Gleitstege 58 gedrückt wird.

Das Endlos-Transportband 56 ist auf seiner äußeren Oberfläche mit Distanzstegen 61 versehen, die trapezförmigen Querschnitt aufweisen, aufvulkanisiert sind und in dessen Längesrichtung verlaufen. Die Zylinderwand des Hohlzylinders 8 stützt sich auf den Distanzstegen 61 ab. Öffnungen 62 im Endlos-Transportband 56 sorgen dafür, daß auch ein Zwischenraum 63 zwischen dem Hohlzylinder 8 und dem Endlos-Transportband 56 ausreichend evakuiert werden kann. Der statische Druck in diesem Zwischenraum 63 liegt etwas höher als in der Unterdruckkammer 57, aber etwas niedriger als der äußere Luftdruck. Dadurch wird der Hohlzylinder 8 gegen die Distanzstege 61 gepreßt und in seiner Lage festgehalten. Ein Bügel 64 dient zur Fixierung der Stützlagerung 21 auf dem Maschinenbett 23. Da die zwischen dem Endlos-Transportband 56 und den Gleitstegen 58 auftretende Reibung unter Umständen den Hohlzylinder 8 stark durch ein Drehmoment belastet, können eine oder beide Umlenkrollen 60 auch motorisch angetrieben werden, beispielsweise durch einen Gleichstrommotor, oder dergleichen.

Die Fig. 12 zeigt eine weitere Ausgestaltung der erfindungsgemäßen Vorrichtung, und zwar in Draufsicht. Gleiche Elemente wie in Fig. 1 sind mit den gleichen Bezugszeichen versehen und werden nicht nochmals detailliert beschrieben. Bei dieser Vorrichtung ist die Bedienungsseite, die in Fig. 12 ganz unten liegt, völlig frei. Sowohl der Leistungslaser 1 als auch der mit Hilfe der Spindel 17 geführte Schlitten 15 befinden sich auf der rückwärtigen Seite der Vorrichtung, so daß von der Bedienungsseite her ein einfacher Zugang zum Maschinenbett 23 möglich ist, was die Bestückung der Vorrichtung mit einem Hohlzylinder 8 und die Entnahme des Hohlzylinders wesentlich vereinfacht. Die Bedienungsseite der Vorrichtung ist in Fig. 12 mit dem Bezugszeichen 65 versehen. Sämtliche die oben genannten Arbeitsvorgänge behindernden Baugruppen und auch der Bereich, der für die Zuführung des Laserstrahls 4 erforderlich ist, sind somit aus dem Bedienungsbereich 65 entfernt worden. Dies ist ganz generell ein Vorteil auch für das Hochrüsten einer Lasergravurmaschine ohne Stützlagerungen 21, aber bei einer solchen Maschine mit Stützlagerungen 21 noch vorteilhafter, weil die Stützlagerungen 21 das Aufrüsten natürlich erschweren. Schon eine Stützlagerung 21 in der Mitte des Hohlzylinders 8 bedingt zusätzliche Arbeiten für das schon beschriebene Aufklappen der Lagerbügel. Die erfindungsgemäße Aufstellung erleichtert diese zusätzlichen Arbeiten jedoch so sehr, daß sie kaum noch ins Gewicht fallen. Da nun der Laserstrahl 4 von der Rückseite her auf den Hohlzylinder 8 auftrifft, sind die Stützlagerungen 21 so positioniert, daß sie die Oberfläche des Hohlzylinders 8 an einer Seite freilassen, die von der Bedienungsseite 65 weggerichtet ist. Gegenüber der Vorrichtung nach Fig. 1 sind daher die Stützlagerungen 21 bei der Vorrichtung nach Fig. 12 um 180 Grad versetzt angeordnet.

Die Ausführungsbeispiele beziehen sich darauf, daß der Laserstrahl zunächst parallel zum Hohlzylinder verläuft, bevor ersterer um 90 Grad abgelenkt wird, um radial auf den Hohlzylinder aufzutreffen. Der Laserstrahl kann aber auch in anderer Weise an den Hohlzylinder herangeführt werden, beispielsweise über Lichtwellenleiter, so daß es auf die zum Hohlzylinder parallele Strahlungsrichtung nicht ankommt. Wichtig ist nur, daß der in Radialrichtung des Hohlzylinders verlaufende Abschnitt des Laserstrahls in Längs- bzw. Axialrichtung des Hohlzylinders verschiebbar ist.

## Patentansprüche

1. Vorrichtung zum Bearbeiten der Oberfläche eines dünnwandigen und zur Herstellung einer Siebdruckschablone dienenden Hohlzylinders (8) mit Hilfe eines wenigstens annähernd radial auf den Hohlzylinder (8) auftreffenden und in dessen Längsrichtung bewegbaren Laserstrahls (4), wobei der Hohlzylinder (8) an seinen axialen Enden mittels zweier auf einem Maschinenbett (23) befestigter Lagereinrichtungen (9, 10) drehbar gelagert und zwischen den Lagereinrichtungen (9, 10) eine den Hohlzylinder (8) umgebende Stützlagerung (21) vorhanden ist, die so ausgebildet ist, daß sie wenigstens eine Bahn, entlang der der Laserstrahl (4) bewegt wird, frei läßt, **dadurch gekennzeichnet,** daß die Stützlagerung (21)
- an einer vorbestimmten Axialposition des Hohlzylinders (8) fest positioniert ist und
- sich unmittelbar am Maschinenbett (23) abstützt.

2. Vorichtung nach Anspruch 1, **dadurch gekennzeichnet,** daß die Stützlagerung (21) etwa in der Mitte des Hohlzylinders (8) positioniert ist.

3. Vorrichtung nach Anspruch 1 oder 2, **dadurch gekennzeichnet,** daß mehrere dieser Stützlagerungen (21) zwischen den Lagereinrichtungen (9, 10) fest positioniert sind.

4. Vorrichtung nach einem der Ansprüche 1 bis 3, **dadurch gekennzeichnet,** daß ein die Lagereinrichtungen (9, 10) aufnehmendes Maschinenbett (23) an vorbestimmten Stellen mit Halteeinrichtungen (22) zum Halten von Stützlagerungen (21) versehen ist.

5. Vorrichtung nach einem der Ansprüche 1 bis 4, **dadurch gekennzeichnet,** daß die Stützlagerung (21) die Oberfläche des Hohlzylinders (8) soweit freiläßt, daß zusammen mit dem Laserstrahl (4) eine den Hohlzylinder (8) außen berührende Abstützeinrichtung (30) in Axialrichtung des Hohlzylinders (8) führbar ist.

6. Vorrichtung nach einem der Ansprüche 1 bis 5, **dadurch gekennzeichnet,** daß die Stützlagerung (21) zwei teilkreisartig ausgebildete und zueinander verschwenkbare Lagerbügel (32a, 32b; 48, 49) aufweist, die zusammen den Hohlzylinder (8) um mehr als 180 Grad umgeben.

7. Vorrichtung nach Anspruch 6**, dadurch gekennzeichnet,** daß an den Lagerbügeln (32a, 32b) Stützrollen (31) montiert sind.

8. Vorrichtung nach Anspruch 7, **dadurch gekennzeichnet,** daß die Stützrollen (31) unter gleichen Winkelabständen am Umfang des Hohlzylinders (8) zu liegen kommen.

9. Vorrichtung nach Anspruch 7 oder 8, **dadurch gekennzeichnet**, daß die Stützrollen (31) als Permanentmagnete ausgebildet sind, um einen Magnetfluß durch den Hohlzylinder (8) hindurchzuleiten.

10. Vorrichtung nach einem der Ansprüche 7 bis 9, **dadurch gekennzeichnet,** daß die Lagerbügel (32a, 32b) mit Permanentmagneten (46) und Polschuhen (45) verbunden sind, um einen Magnetfluß durch den Hohlzylinder (8) hindurchzuleiten.

11. Vorrichtung nach einem der Ansprüche 7 bis 10, **dadurch gekennzeichnet,** daß die Stützrollen (31) in, Umfangsbereich elastisches Material (43) aufweisen.

12. Vorrichtung nach einem der Ansprüche 1 bis 11, **dadurch gekennzeichnet,** daß zur Stützlagerung (21) ein elastisches Element (33, 38) gehört, das im Innern des Hohlzylinders (8) angeordnet ist und im Bereich der Stützlagerung (21) gegen die Innenwand des Hohlzylinders (8) drückt.

13. Vorrichtung nach Anspruch 12, **dadurch gekennzeichnet,** daß das elastische Element (33) aufblasbar ist.

14. Vorrichtung nach Anspruch 13, **dadurch gekennzeichnet,** daß das elastische Element (33) ballförmig ausgebildet ist.

15. Vorrichtung nach einem der Ansprüche 12 bis 14, **dadurch gekennzeichnet,** daß das elastische Element (33) an seiner Oberfläche Metallamellen (34) trägt.

16. Vorrichtung nach Anspruch 12, **dadurch gekennzeichnet,** daß das elastische Element ein Spannring (38, 39) ist.

17. Vorrichtung nach Anspruch 6, **dadurch gekennzeichnet,** daß die Lagerbügel (48, 49) hohlringartig ausgebildet sind und in ihrer dem Hohlzylinder (8) benachbarten Wand Durchgangsöffnungen (52) aufweisen.

18. Vorrichtung nach Anspruch 17, **dadurch gekennzeichnet,** daß die die Durchgangsöffnungen (52) aufweisende Wand an ihrer dem Hohlzylinder (8) zugewandten Seite mit einer mit den Durchgangsöffnungen (52) in Verbindung stehenden flachen Ausnehmung (53) versehen ist.

19. Vorrichtung nach einem der Ansprüche 1 bis 5, **dadurch gekennzeichnet,** daß die Stützlagerung (21) aus einer halbkreisförmigen Kammer (57) mit zum Hohlzylinder (8) gerichteter offener Seite besteht, und daß auf der halbkreisförmigen Kammer (57) ein perforiertes Endlos-Flachband (56) umläuft.

20. Vorrichtung nach Anspruch 19, **dadurch gekennzeichnet,** daß im Innern der Kammer (57) Stege (58) zum Abstützen des Endlos-Flachbands (56) vorhanden sind.

21. Vorrichtung nach Anspruch 19 oder 20, **dadurch gekennzeichnet,** daß das Endlos-Flachband (56) an seiner äußeren Oberfläche parallele Längsstege (61) aufweist.

22. Vorrichtung nach Anspruch 19, 20 oder 21, **dadurch gekennzeichnet,** daß das Endlos-Flachband (56) durch wenigstens einen Motor angetrieben wird, der mit der Kammer (57) verbunden ist.

23. Vorrichtung nach einem der Ansprüche 1 bis 22, **dadurch gekennzeichnet,** daß die Stützlagerung (21) so positioniert ist, daß sie die Oberfläche des Hohlzylinders (8) an einer Seite freiläßt, die von einer Vorrichtungs-Bedienungsseite (65) weggerichtet ist.

## Claims

1. Apparatus for treating the surface of a thin-walled hollow cylinder (8), serving to produce a screen printing stencil, with the aid of a laser beam (4) which impinges at least approximately radially on the hollow cylinder (8) and can be moved in the longitudinal direction thereof, the hollow cylinder (8) being rotatably mounted at its axial ends by means of two bearing devices (9, 10) attached to a machine foundation (23), and a supporting bearing (21) being present between the bearing devices (9, 10), which supporting bearing surrounds the hollow cylinder (8) and is designed in such a way that it leaves at least one path exposed, along which the laser beam (4) is moved, characterized in that the supporting bearing (21) is positioned fixedly at a predetermined axial position of the hollow cylinder (8) and is supported directly on the machine foundation (23).

2. Apparatus according to Claim 1, characterized in that the supporting bearing (21) is positioned approximately in the middle of the hollow cylinder (8).

3. Apparatus according to Claim 1 or 2, characterized in that a plurality of these supporting bearings (21) are positioned fixedly between the bearing devices (9, 10).

4. Apparatus according to one of Claims 1 to 3, characterized in that a machine foundation (23) which receives the bearing devices (9, 10) is provided at predetermined places with holding devices (22) for holding supporting bearings (21).

5. Apparatus according to one of Claims 1 to 4, characterized in that the supporting bearing (21) leaves the surface of the hollow cylinder (8) exposed to the extent that a supporting device (30) which touches the hollow cylinder (8) on the outside can be moved together with the laser beam (4) in the axial direction of the hollow cylinder (8).

6. Apparatus according to one of Claims 1 to 5, characterized in that the supporting bearing (21) has two bearing bows (32a, 32b; 48, 49) which are designed in the manner of a partial circle, can be pivoted towards one another, and together surround the hollow cylinder (8) over more than 180 degrees.

7. Apparatus according to Claim 6, characterized in that supporting rollers (31) are mounted on the bearing bows (32a, 32b).

8. Apparatus according to Claim 7, characterized in that the supporting rollers (31) come to rest on the circumference of the hollow cylinder (8) at equal angular intervals.

9. Apparatus according to Claim 7 or 8, characterized in that the supporting rollers (31) are designed as permanent magnets in order to pass a magnetic flux through the hollow cylinder (8).

10. Apparatus according to one of Claims 7 to 9, characterized in that the bearing bows (32a, 32b) are connected to permanent magnets (46) and pole shoes (45) in order to pass a magnetic flux through the hollow cylinder (8).

11. Apparatus according to one of Claims 7 to 10, characterized in that the supporting rollers (31) have elastic material (43) in the circumferential region.

12. Apparatus according to one of Claims 1 to 11, characterized in that an elastic element (33, 38) belongs to the supporting bearing (21), which elastic element is arranged inside the hollow cylinder (8) and presses against the inner wall of the hollow cylinder (8) in the region of the supporting bearing (21).

13. Apparatus according to Claim 12, characterized in that the elastic element (33) is inflatable.

14. Apparatus according to Claim 13, characterized in that the elastic element (33) is of ball-shaped design.

15. Apparatus according to one of Claims 12 to 14, characterized in that the elastic element (33) bears metal lamellae (34) on its surface.

16. Apparatus according to Claim 12, characterized in that the elastic element is a clamping ring (38, 39).

17. Apparatus according to Claim 6, characterized in that the bearing bows (48, 49) are designed in the manner of a hollow ring and have passage openings (52) in their wall adjacent to the hollow cylinder (8).

18. Apparatus according to Claim 17, characterized in that the wall having the passage openings (52) is provided, on its side facing the hollow cylinder (8), with a shallow recess (53) connected to the passage openings (52).

19. Apparatus according to one of Claims 1 to 5, characterized in that the supporting bearing (21) consists of a semicircular chamber (57) with an open side directed towards the hollow cylinder (8), and in that a perforated endless flat belt (56) circulates on the semicircular chamber (57).

20. Apparatus according to Claim 19, characterized in that there are webs (58) inside the chamber (57) for supporting the endless flat belt (56).

21. Apparatus according to Claim 19 or 20, characterized in that the endless flat belt (56) has parallel longitudinal webs (61) on its outer surface.

22. Apparatus according to Claim 19, 20 or 21, characterized in that the endless flat belt (56) is driven by at least one motor which is connected to the chamber (57).

23. Apparatus according to one of Claims 1 to 22, characterized in that the supporting bearing (21) is positioned in such a way that it leaves the surface of the hollow cylinder (8) exposed on one side which is directed away from an apparatus operating side (65).

## Revendications

1. Dispositif d'usinage de la surface d'un cylindre creux, à paroi mince (8) et servant à la fabrication d'un gabarit ou écran de sérigraphie, à l'aide d'un rayon laser (4) arrivant au moins de façon sensiblement radiale sur le cylindre creux (8) et susceptible de se déplacer dans sa direction longitudinale, le cylindre creux (8) étant monté à rotation à ses extrémités axiales, au moyen de deux dispositifs de palier (9, 10) fixés sur un banc de machine (23), et un palier d'appui (2) entourant le cylindre creux (8) étant prévu entre les dispositifs de palier (9, 10) et réalisé de manière à laisser libre au moins une trajectoire, le long de laquelle est déplacé le rayon laser (4), caractérisé en ce que le palier d'appui (21)
- est positionné rigidement sur une position axiale prédéterminée du cylindre creux (8), et
- prend appui directement sur le banc de machine (23).

2. Dispositif selon la revendication 1, caractérisé en ce que le palier d'appui (21) est positionné sensiblement au milieu du cylindre creux (8).

3. Dispositif selon la revendication 1 ou 2, caractérisé en ce que plusieurs de ces paliers d'appui (21) sont positionnés rigidement entre les dispositifs de palier (9, 10).

4. Dispositif selon l'une des revendications 1 à 3, caractérisé en ce qu'un banc de machine (23) recevant les dispositifs de paliers (9, 10) est muni en des emplacements prédéterminés de dispositifs de maintien (22) destinés au maintien des paliers d'appui (21).

5. Dispositif selon l'une des revendications 1 à 4, caractérisé en ce que le palier d'appui (21) laisse libre la surface du cylindre creux (8) , suffisamment pour qu'un dispositif d'appui (30) venant en contact extérieur avec le cylindre creux (8) puisse être guidé, conjointement au rayon laser (4), dans la direction axiale du cylindre creux (8).

6. Dispositif selon l'une des revendications 1 à 5, caractérisé en ce que le palier d'appui (21) comporte deux étriers de palier (32a, 32b; 48, 49) réalisés en forme de parties de cercles et susceptibles de pivoter les uns par rapport aux autres, et qui entourent conjointement le cylindre creux (8) sur un angle supérieur à 180°.

7. Dispositif selon la revendication 6, caractérisé en ce que des galets d'appui (31) sont montés sur les étriers de palier (32a, 32b).

8. Dispositif selon la revendication 7, caractérisé en ce que les galets d'appui (31) viennent se placer sur la périphérie du cylindre creux selon des espacements angulaires égaux.

9. Dispositif selon la revendication 7 ou 8, caractérisé en ce que les galets d'appui (31) sont réalisés sous forme d'aimants permanents, pour faire passer un flux magnétique à travers le cylindre creux (8).

10. Dispositif selon l'une des revendications 7 à 9, caractérisé en ce que les étriers de palier (32a, 32b) sont reliés à des aimants permanents (46) et à des patins polaires (45) pour faire passer un flux magnétique à travers le cylindre creux (8).

11. Dispositif selon l'une des revendications 7 à 10, caractérisé en ce que les galets d'appui (31) présentent dans leur zone périphérique un matériau élastique.

12. Dispositif selon l'une des revendications 1 à 11, caractérisé en ce qu'un élément élastique (33, 36) appartient au palier d'appui (21) et est disposé à l'intérieur du cylindre creux (8) et presse contre la paroi intérieure du cylindre creux (8) dans la zone du palier d'appui (21).

13. Dispositif selon la revendication 12, caractérisé en ce que l'élément élastique (33) est susceptible d'être gonflé.

14. Dispositif selon la revendication 13, caractérisé en ce que l'élément élastique (33) est réalisé en forme de ballon.

15. Dispositif selon l'une des revendications 12 à 14, caractérisé en ce que l'élément élastique (33) porte à sa surface des lamelles métalliques (34).

16. Dispositif selon la revendication 12, caractérisé en ce que l'élément élastique est une bague de serrage ou une bague élastique (38, 39).

17. Dispositif selon la revendication 6, caractérisé en ce que les étriers de palier (48, 49) sont réalisés sous forme d'anneaux creux et comportent des ouvertures de passage (52) dans leur paroi voisine du cylindre creux (8).

18. Dispositif selon la revendication 17, caractérisé en ce que la paroi présentant les ouvertures de passage (52) est pourvue, sur sa face tournée vers le cylindre creux (8), d'un évidement (53) plat relié aux ouvertures de passage (52).

19. Dispositif selon l'une des revendications 1 à 5, caractérisé en ce que le palier d'appui (21) est composé d'une chambre (57) en forme de demi-cercle, avec une face ouverte orientée vers le cylindre creux (8) , et en ce qu'une bande plate continue perforée (56) circule autour de la chambre (57) en forme de demi-cercle.

20. Dispositif selon la revendication 19, caractérisé en ce que des nervures (58) sont prévues à l'intérieur de la chambre (57) pour l'appui à la bande plate continue (56).

21. Dispositif selon la revendication 19 ou 20, caractérisé en ce que la bande plate continue (56) comporte sur sa surface extérieure des nervures longitudinales parallèles (61).

22. Dispositif selon la revendication 19, 20 ou 21, caractérisé en ce que la bande plate continue (56) est entraînée à l'aide d'au moins un moteur relié à la chambre (57).

23. Dispositif selon l'une des revendications 1 à 22, caractérisé en ce que le palier d'appui (21) est positionné de telle manière qu'il laisse libre la surface du cylindre creux (8) sur une face dirigée en s'éloignant du côté de service (65) du dispositif.
